# EUROPÄISCHE PATENTSCHRIFT

(11) **EP 1 015 786 B1**
(45) Veröffentlichungstag und Bekanntmachung des Hinweises auf die Patenterteilung: **27.08.2003**
(21) Anmeldenummer: 98950068.1
(22) Anmeldetag: 16.09.1998
(51) Int. Cl.: F16D 65/16, F16H 25/22

(54) **ELEKTROMECHANISCH BETÄTIGBARE SCHEIBENBREMSE**
ELECTROMECHANICALLY OPERATED DISK BRAKE
FREIN A DISQUE A ACTIONNEMENT ELECTROMECANIQUE

(30) Priorität: 16.09.1997 DE 19740867
(43) Veröffentlichungstag der Anmeldung: 05.07.2000
(73) Patentinhaber: Continental Teves AG & Co. oHG, 60488 Frankfurt am Main (DE)
(72) Erfinder: SCHMITT, Stefan, D-65343 Eltville (DE); KRANLICH, Holger, D-61184 Karben (DE)
(86) Internationale Anmeldenummer: EP9806037
(87) Internationale Veröffentlichungsnummer: WO99014516

(56) Entgegenhaltungen:
- WO-A-88/04741
- WO-A-97/11287
- DE-A- 19 543 098
- DE-A- 19 605 988
- GB-A- 1 048 011
- US-A- 3 744 332
- US-A- 4 884 466

## Beschreibung

Die Erfindung betrifft eine elektromechanisch betätigbare Scheibenbremse für Kraftfahrzeuge mit einem Bremssattel, sowie einer am Bremssattel angeordneten Betätigungseinheit, mit zwei mit je einer Seitenfläche einer Bremsscheibe zusammenwirkenden, im Bremssattel begrenzt verschiebbar angeordneten Reibbelägen, wobei einer der Reibbeläge mittels eines Betätigungselementes durch die Betätigungseinheit direkt und der andere Reibbelag durch die Wirkung einer vom Bremssattel aufgebrachten Reaktionskraft mit der Bremsscheibe in Eingriff bringbar ist, und wobei die Betätigungseinheit einen koaxial zum Betätigungselement angeordneten Elektromotor sowie einen wirkungsmäßig zwischen ihm und dem Betätigungselement angeordneten, ein Untersetzungsgetriebe bildenden Rollengewindetrieb mit Rückführung der Gewinderollen aufweist.

Eine derartige elektromechanisch betätigbare Scheibenbremse ist z.B. aus der DE 195 11 287 A1 bekannt. Die Betätigungseinheit der bekannten Scheibenbremse besteht aus einem Elektromotor, einem Betätigungselement sowie einem zwischen Elektromotor und Betätigungselement angeordneten Untersetzungsgetriebe, das als ein Rollengewindetrieb mit Rückführung der Gewinderollen ausgebildet ist. Durch eine Axialverschiebung der Spindel des Rollengewindetriebs wird der der Betätigungseinheit zugeordnete Reibbelag in Eingriff mit der Bremsscheibe gebracht. Das Betätigungselement wird bei der vorbekannten Scheibenbremse durch die Spindel des Rollengewindetriebs gebildet, dessen Gewindemutter vom Elektromotor angetrieben wird, um eine entsprechende Spannkraft zu erzeugen. Als nachteilig wird bei der bekannten elektromechanisch betätigbaren Scheibenbremse die beträchtliche Belastung der Spindel durch Querkräfte empfunden, die insbesondere bei großen Verfahrwegen (verschlissene Bremsbeläge) auftreten und auf die Wirkung von Umfangskräften der Beläge sowie der bei der Betätigung der Betätigungseinheit auftretenden Aufweitung des Bremssattels zurückzuführen sind.

Es ist daher Aufgabe der vorliegenden Erfindung, eine elektromechanisch betätigbare Scheibenbremse der eingangs genannten Gattung dahingehend zu verbessern, daß der Einfluß von Störkräften und -momenten eliminiert wird.

Diese Aufgabe wird erfindungsgemäß durch den kennzeichnenden Teil des Anspruchs 1 gelöst. Eine derart aufgebaute elektromechanisch betätigbare Scheibenbremse zeichnet sich durch einen hohen Wirkungsgrad sowie eine extrem kompakte Bauweise aus, die durch eine sehr kurze und steife Ausführung der Spindel ermöglicht wird, mit der hohe, massenbezogene Bremsmomente übertragen werden können.

Zur Konkretisierung des Erfindungsgedankens ist vorgesehen, daß das Untersetzungsgetriebe im Bremssattel gelagert ist.

Eine besonders vorteilhafte Weiterbildung des Erfindungsgegenstandes zeichnet sich dadurch aus, daß mit den Gewinderollen zusammenwirkende Nockenscheiben mit der Spindel fest verbunden sind und eine der Rückführung der Gewinderollen dienende Nut in der Spindel ausgebildet ist.

Um eine erhebliche Reduzierung des vom Elektromotor aufzubringenden erforderlichen Antriebsmoments zu erreichen erfolgt die Kraftübertragung zwischen dem Elektromotor und der Spindel mittels eines Planetengetriebes.

Das Sonnenrad des Planetengetriebes ist dabei vorzugsweise durch den Rotor des Elektromotors gebildet, während die Planetenräder mit einer das Hohlrad des Planetengetriebes bildenden, im Gehäuse der Betätigungseinheit ausgebildeten Innenverzahnung im Eingriff stehen und auf einem Planetenradträger angeordnet sind,, der mit der Spindel zusammenwirkt.

Bei einer anderen vorteilhaften Weiterbildung der Erfindung erfolgt die Kraftübertragung zwischen dem Rotor des Elektromotors und der Spindel mittels einer Wellenlängsverzahnung.

Eine weitere vorteilhafte Ausführung der Erfindung sieht vor, daß zwischen dem Betätigungselement und dem ersten Reibbelag eine Verdrehsicherung vorgesehen ist. Als Verdrehsicherung kann beispielsweise eine Belaghaltefeder dienen, die an für hydraulisch betätigbare Scheibenbremsen vorgesehenen Reibbelägen angebracht ist.

Die Erfindung wird in der nachfolgenden Beschreibung von zwei Ausführungsbeispielen unter Bezugnahme auf die beiliegende Zeichnung näher erläutert.

In der Zeichnung zeigt:
- Fig. 1: eine erste Ausführung der erfindungsgemäßen, elektromechanisch betätigbaren Scheibenbremse im Axialschnitt;
- Fig. 2: eine zweite Ausführung der erfindungsgemäßen, elektromechanisch betätigbaren Scheibenbremse in einer der Fig. 1 entsprechenden Darstellung;
- Fig. 3: eine detaillierte Darstellung des bei der Bremse nach Fig. 1 oder 2 verwendeten Rollengewindetriebs, teilweise geschnitten, und
- Fig. 4: den Rollengewindetrieb nach Fig. 3 in aufgelöster Darstellung.

Die in der Zeichnung dargestellte, elektromechanisch betätigbare Scheibenbremse nach der Erfindung, die im gezeigten Beispiel als eine Schwimmsattel-Scheibenbremse ausgebildet ist, besteht im wesentlichen aus einem in einem nicht gezeigten feststehenden Halter verschiebbar gelagerten Bremssattel 1 sowie einer Betätigungseinheit 2, deren Gehäuse 8 mittels nicht gezeigter Befestigungselemente am Bremssattel 1 angeordnet ist. Ein Paar von Reibbelägen 4 und 5 ist im Bremssattel 1 derart angeordnet, daß sie der rechten und der linken Seitenfläche einer Bremsscheibe 3 zugewandt sind.

Nachstehend wird der in der Zeichnung rechts gezeigte Reibbelag 4 als erster Reibbelag und der andere, mit 5 bezeichnete Reibbelag als zweiter Reibbelag bezeichnet.

Während der erste Reibbelag 4 mittels eines Betätigungselements 30 durch die Betätigungseinheit 2 direkt mit der Bremsscheibe 3 in Eingriff bringbar ist, wird der zweite Reibbelag 5 durch die Wirkung einer bei der Betätigung der Anordnung vom Bremssattel 1 aufgebrachten Reaktionskraft gegen die gegenüberliegende Seitenfläche der Bremsscheibe 3 gedrückt.

Die vorhin erwähnte Betätigungseinheit 2 besteht aus einem Elektromotor 6, der im dargestellten Beispiel als ein permanentmagneterregter, elektronisch kommutierbarer (Torque-) Motor ausgebildet ist, dessen Stator 9 unbeweglich im Gehäuse 8 angeordnet ist und dessen Rotor 10 bzw. Hohlwelle durch einen ringförmigen Träger 28 gebildet ist, der mehrere Permanentmagnetsegmente 29 trägt. Zwischen dem Torque-Motor 6 und dem vorhin erwähnten, vorzugsweise koaxial zum Motor 6 angeordneten Betätigungselement 30 ist wirkungsmäßig ein Untersetzungsgetriebe 7 angeordnet, das im gezeigten Beispiel als ein Rollengewindetrieb 11 bis 16 mit axialer Rückführung der Gewinderollen ausgebildet ist. Der Rollengewindetrieb besteht dabei im wesentlichen aus einer Gewindemutter 11 sowie einer Gewindespindel 16, wobei in der Gewindemutter 11 Gewinderollen 12,13,14,15 achsparallel angeordnet sind, die bei einer Rotationsbewegung der Spindel 16 sich planetenartig drehen und die Gewindemutter 11 in eine axiale Bewegung versetzen. Für das Umsetzen (Rückführen) der Gewinderollen 12,13,14,15 sorgen zwei mit der Spindel 16 fest verbundene Nockenscheiben 17 und 18.

Die Anordnung ist dabei vorzugsweise derart getroffen, daß der Rotor 10 des Torque-Motors 6 drehfest, beispielsweise mittels einer Wellenlängsverzahnung 19, mit der Spindel 16 verbunden ist. Das vorhin erwähnte Betätigungselement 30 wird dabei durch die Gewindemutter 11 gebildet, deren dem ersten Reibbelag 4 zugewandte Stirnfläche an diesem axial anliegt. Zwischen der Gewindemutter 11 und dem ersten Reibbelag 4 ist vorzugsweise eine Verdrehsicherung 42 vorgesehen, die durch einen im Reibbelag 4 eingepreßten Stift gebildet ist, der von einer in der Stirnfläche der Gewindemutter 11 ausgebildeten Ausnehmung aufgenommen wird. Der Führung des Untersetzungs-getriebes 7 bzw. seiner Gewindemutter 11 im Bremssattel 1 dient ein mit dem Bremssattel 1 fest verbundenes bzw. im Bremssattel 1 ausgebildetes zylindrisches Führungsteil 23, an dem sich der Rotor 10 unter Zwischenschaltung eines Axiallagers 24 abstützt. Auf der anderen Seite stützt sich der Rotor 10 an einem im Gehäuse 8 fest angeordneten zweiten Axiallager 25 ab. Der Lagerung der Spindel 16 sowohl in der axialen als auch in der radialen Richtung dient eine kombinierte Lageranordnung 26, die am in der Zeichnung rechts gezeichneten Ende des Führungsteiles 23 angeordnet ist. Die kombinierte Lageranordnung 26 ist dabei vorzugsweise durch ein Axiallager 27 sowie ein Radial(nadel-)-lager 31 gebildet, wobei am Axiallager 27 eine Stirnseite eines in der Nähe der Nockenscheibe 18 an der Spindel 16 ausgebildeten Bundes 32 anliegt, während im Radiallager 31 das aus der Gewindemutter 11 herausragende Ende der Spindel 16 geführt ist.

Um den Rollengewindetrieb 7 exakt positionieren sowie Steuersignale für eine elektronische Kommutierung des Torque-Motors 6 gewinnen zu können, ist im Gehäuse 8 der Betätigungseinheit 2 ein kontaktloser Meßwert- bzw. Winkelgeber, ein sogenannter Resolver 20, vorgesehen. Im dargestellten Beispiel besteht der Resolver 20 aus zwei koaxial zueinander durch einen Luftspalt voneinander getrennten Ringen 21,22, die elektrische Wicklungen tragen. Der radial innenliegende Ring 21 ist dabei mit der Spindel 16 verbunden, während der andere, radial äußere Ring 22 drehfest im Gehäuse 8 angeordnet ist.

Um schließlich die im Betrieb des Torque-Motors 6 entstehende Wärme wirksam an die Umgebung weiterleiten zu können, ist das Gehäuse 8 mit großflächigen Kühlrippen 33 versehen.

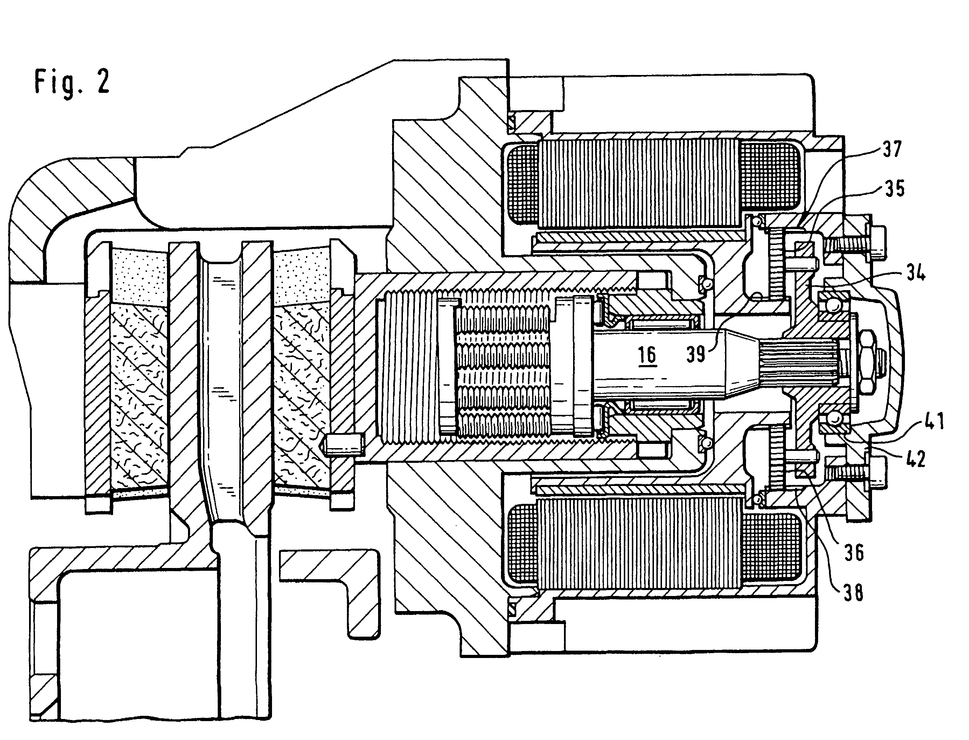

Bei dem in Fig. 2 gezeigten zweiten Ausführungsbeispiel des Erfindungsgegenstandes wird eine Reduzierung des erforderlichen Motormoments wird durch zweckmäßige Integration eines Planetengetriebes 34,35,36,37 erreicht. Das Planetengetriebe, das wirkungsmäßig zwischen dem Rotor 10 und der Gewindespindel 16 angeordnet ist, besteht aus einem Sonnenrad, das durch einen am Ende des Rotors 10 ausgebildeten verzahnten Bereich 39 gebildet ist, mehreren Planetenrädern, von denen zwei dargestellt und mit den Bezugszeichen 35 und 36 versehen sind, einem Hohlrad 37, das durch eine im Bremssattel 1 ausgebildete Innenverzahnung 38 gebildet ist, sowie einem Planetenradträger 34, der vorzugsweise am Ende der Spindel 16 befestigt ist. Die Lagerung des Planetenradträgers 34 im Gehäuse 8 der Betätigungseinheit 2 erfolgt mittels eines Radiallagers 41, das in einem das Gehäuse 8 verschließenden Deckel 42 angeordnet ist.

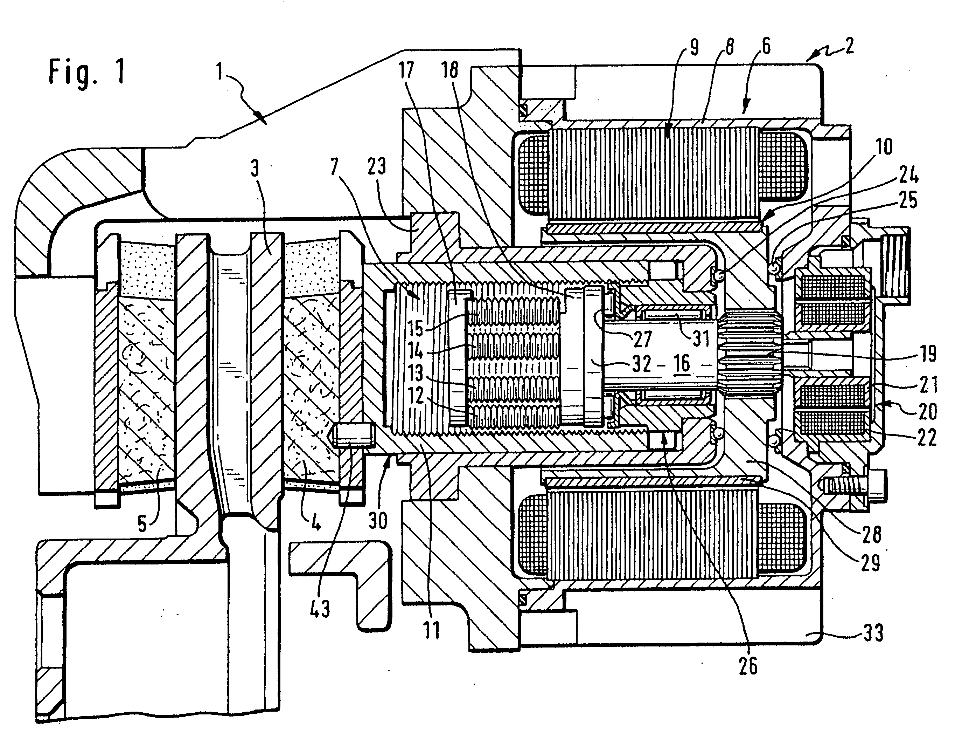

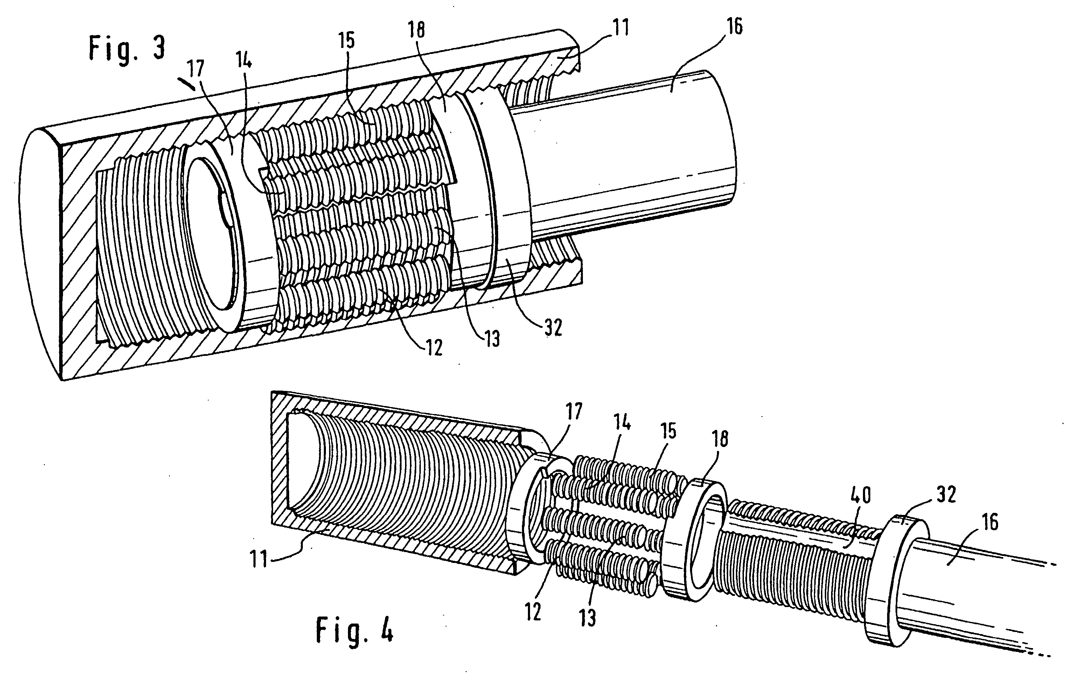

Wie bereits im Zusammenhang mit den in Fig. 1 und 2 gezeigten Ausführungsbeispielen erwähnt wurde, ist das in Fig. 3 und 4 abgebildete Untersetzungsgetriebe 7 als ein Rollengewindetrieb mit axialer Rückführung der Gewinderollen 12 bis 15 ausgebildet, die in einem zwischen der Gewindemutter 11 und der Gewindespindel 16 begrenzten Ringraum angeordnet sind. Die Gewinderollen 12 bis 15 laufen bei ihrem Umlauf anschließend in eine in der Gewindespindel 16 ausgebildete Axialnut 40, so daß sie sich sowohl aus der Gewindemutter 11 als auch dem Spindelgewinde lösen. Die axiale Rückführung der Gewinderollen 12 bis 15 zu ihrem Ausgangspunkt wird durch die vorhin erwähnten, mit der Spindel 16 fest verbundenen Nockenscheiben 17, 18 gesteuert, die sie nach jedem Umlauf in der Gewindemutter 11 zurücksetzen.

### Bezugszeichenliste

- 1: Bremssattel
- 2: Betätigungseinheit
- 3: Bremsscheibe
- 4: Reibbelag
- 5: Reibbelag
- 6: Elektromotor
- 7: Untersetzungsgetriebe
- 8: Gehäuse
- 9: Stator
- 10: Rotor
- 11: Gewindemutter
- 12: Gewinderolle
- 13: Gewinderolle
- 14: Gewinderolle
- 15: Gewinderolle
- 16: Spindel
- 17: Nockenscheibe
- 18: Nockenscheibe
- 19: Wellenlängsverzahnung
- 20: Resolver
- 21: Ring
- 22: Ring
- 23: Führungsteil
- 24: Axiallager
- 25: Axiallager
- 26: Lageranordnung
- 27: Axiallager
- 28: Träger
- 29: Permanentmagnetsegment
- 30: Betätigungselement
- 31: Radiallager
- 32: Bund
- 33: Kühlrippe
- 34: Planetenradträger
- 35: Planetenrad
- 36: Planetenrad
- 37: Hohlrad
- 38: Verzahnung
- 39: Sonnenrad
- 40: Axialnut
- 41: Radiallager
- 42: Deckel
- 43: Verdrehsicherung

## Patentansprüche

1. Elektromechanisch betätigbare Scheibenbremse für Kraftfahrzeuge mit einem Bremssattel (1), sowie einer am Bremssattel (1) angeordneten Betätigungseinheit (2), mit zwei mit je einer Seitenfläche einer Bremsscheibe (3) zusammenwirkenden, im Bremssattel (1) begrenzt verschiebbar angeordneten Reibbelägen (4,5), wobei einer (4) der Reibbeläge (4,5) mittels eines Betätigungselementes (30) durch die Betätigungseinheit (2) direkt und der andere Reibbelag (5) durch die Wirkung einer vom Bremssattel (1) aufgebrachten Reaktionskraft mit der Bremsscheibe (3) in Eingriff bringbar ist, und wobei die Betätigungseinheit (2) einen koaxial zum Betätigungselement (30) angeordneten Elektromotor (6) sowie einen wirkungsmäßig zwischen ihm und dem Betätigungselement (30) angeordneten, ein Untersetzungsgetriebe (7) bildenden Rollengewindetrieb (11 - 16) mit Rückführung der Gewinderollen (12-15) aufweist, **dadurch gekennzeichnet, daß** das Betätigungselement (30) durch die Gewindemutter (11) des Rollengewindetriebs (11 - 16) gebildet wird, die von der Spindel (16) des Rollengewindetriebs (11 - 16) angetrieben wird, die ihrerseits durch den Elektromotor (6) angetrieben wird.

2. Elektromechanisch betätigbare Scheibenbremse nach Anspruch 1, **dadurch gekennzeichnet, daß** das Untersetzungsgetriebe (7) im Bremssattel (1) gelagert ist.

3. Elektromechanisch betätigbare Scheibenbremse nach Anspruch 1 oder 2, **dadurch gekennzeichnet, daß** mit den Gewinderollen (12,13,14,15) zusammenwirkende Nockenscheiben (17,18) mit der Spindel (16) fest verbunden sind und eine der Rückführung der Gewinderollen (12,13,14,15) dienende Nut (40) in der Spindel (16) ausgebildet ist.

4. Elektromechanisch betätigbare Scheibenbremse nach Anspruch 2 oder 3, **dadurch gekennzeichnet, daß** die Kraftübertragung zwischen dem Elektromotor (6) und der Spindel (16) mittels eines Planetengetriebes (34 - 39) erfolgt.

5. Elektromechanisch betätigbare Scheibenbremse nach Anspruch 4, **dadurch gekennzeichnet, daß** das Sonnenrad (39) des Planetengetriebes auf dem Rotor (10) des Elektromotors (6) ausgebildet ist, während die Planetenräder (35,36) auf einem mit der Spindel (16) zusammenwirkenden Planetenradträger (34) angeordnet sind und mit einer das Hohlrad (37) des Planetengetriebes bildenden, im Gehäuse (8) der Betätigungseinheit (2) ausgebildeten Innenverzahnung (38) im Eingriff stehen.

6. Elektromechanisch betätigbare Scheibenbremse nach Anspruch 2 oder 3, **dadurch gekennzeichnet, daß** die Kraftübertragung zwischen dem Rotor (10) des Elektromotors (6) und der Spindel (16) mittels einer Wellenlängsverzahnung (19) erfolgt.

7. Elektromechanisch betätigbare Scheibenbremse nach einem der vorhergehenden Ansprüche, **dadurch gekennzeichnet, daß** zwischen dem Betätigungselement (30) bzw. der Gewindemutter (11) und dem ersten Reibbelag (4) eine Verdrehsicherung (43) vorgesehen ist.

## Claims

1. Electromechanically operable disc brake for automotive vehicles which includes a brake caliper (1) and an actuating unit (2) arranged on the brake caliper (1), two friction linings (4, 5) which cooperate with each one lateral surface of a brake disc (3) and are arranged in the brake caliper (1) so as to be slidable within limits, wherein one (4) of the friction linings (4, 5) is directly movable into engagement with the brake disc (3) by the actuating unit (2) by way of an actuating element (30) and the other friction lining (5) is movable into engagement with the brake disc (3) by the effect of a reaction force generated by the brake caliper (1), and wherein the actuating unit (2) includes an electric motor (6) which is arranged coaxially to the actuating element (30) as well as a threaded roller pinion (11 - 16) with a return arrangement of the threaded rollers (12 - 15) that is interposed between the electric motor and the actuating element (30) in terms of effect and forms a reduction gear (7),
**characterized in that** the actuating element (30) is provided by the threaded nut (11) of the threaded roller pinion (11 - 16) being is driven by the spindle (16) of the threaded roller pinion (11 - 16) which, in turn, is driven by the electric motor (6).

2. Electromechanically operable disc brake as claimed in claim 1,
**characterized in that** the reduction gear (7) is mounted in the brake caliper (1).

3. Electromechanically operable disc brake as claimed in claim 1 or claim 2,
**characterized in that** cam plates (17, 18) which cooperate with the threaded rollers (12, 13, 14, 15) are rigidly coupled to the spindle (16), and a groove (40) is provided in the spindle (16) which is used for the return of the threaded rollers (12, 13, 14, 15).

4. Electromechanically operable disc brake as claimed in claim 2 or claim 3,
**characterized in that** the force transmission between the electric motor (6) and the spindle (16) is carried out by way of a planetary gear (34 - 39).

5. Electromechanically operable disc brake as claimed in claim 4,
**characterized in that** the sun wheel (39) of the planetary gear is provided on the rotor (10) of the electric motor (6), and the planet pinions (35, 36) are arranged on a planet pinion carrier (34) which cooperates with the spindle (16) and are in engagement with an internal toothing system (38) configured in the housing (8) of the actuating unit (2) and providing the hollow wheel (37) of the planetary gear.

6. Electromechanically operable disc brake as claimed in claim 2 or claim 3,
**characterized in that** the force transmission between the rotor (10) of the electric motor (6) and the spindle (16) is effected by way of a longitudinal shaft serration (19).

7. Electromechanically operable disc brake as claimed in any one of the preceding claims,
**characterized in that** a rotation-preventing mechanism (43) is provided between the actuating element (30) or the threaded nut (11) and the first friction lining (4).

## Revendications

1. Frein à disque, pour véhicule automobile, à actionnement électromécanique et comprenant un étrier de frein (1), une unité d'actionnement (2), disposée sur l'étrier de frein (1), et deux garnitures de friction (4, 5) coopérant à chacune avec une surface latérale respective d'un disque de frein (3) et disposées de façon à pouvoir être déplacées en translation d'une manière limitée dans l'étrier de frein (1), les garnitures de frein (4, 5) pouvant être amenées en prise avec le disque de frein (3) par l'unité d'actionnement (2) au moyen d'un élément d'actionnement (30) respectivement la première (4) directement et l'autre (5) sous l'effet d'une force de réaction exercée par l'étrier de frein (1), l'unité d'actionnement (2) comprenant un moteur électrique (6), disposé d'une manière coaxiale vis-à-vis de l'élément d'actionnement (30), et une vis à rouleaux (11 - 16) à retour des rouleaux filetés (12 - 15) qui est disposé de façon à coopérer avec eux entre le moteur électrique (6) et l'élément d'actionnement (30) et qui constitue un mécanisme de démultiplication (7), **caractérisé en ce que** l'élément d'actionnement (30) est constitué par l'écrou de vis (11) de la vis à rouleaux (11 - 16) qui est entraîné par la broche (16) de la vis à rouleaux (11 - 16), laquelle est elle-même entraînée par le moteur électrique (6).

2. Frein à disque à actionnement électromécanique suivant la revendication 1, **caractérisé en ce que** le mécanisme de démultiplication (7) est monté dans l'étrier de frein (1).

3. Frein à disque à actionnement électromécanique suivant la revendication 1 ou 2, **caractérisé en ce que** des disques à came (17, 18) coopérant avec les rouleaux filetés (12, 13, 14, 15) sont fixés à demeure sur la broche (16) et une rainure (40) servant au retour des rouleaux filetés (12, 13, 14, 15) est ménagée dans la broche (16).

4. Frein à disque à actionnement électromécanique suivant la revendication 2 ou 3, **caractérisé en ce que** la transmission de force entre le moteur électrique (6) et la broche (16) s'effectue au moyen d'un train d'engrenages planétaire (34 - 39).

5. Frein à disque à actionnement électromécanique suivant la revendication 4, **caractérisé en ce que** le planétaire (39) du train d'engrenages planétaire est réalisé sur le rotor (10) du moteur électrique (6), tandis que les satellites (35, 36) sont disposés sur un porte-satellites (34) coopérant avec la broche (16) et engrènent avec une denture intérieure (38) constituant la couronne (37) du train d'engrenages planétaire et ménagée dans le boîtier (8) de l'unité d'actionnement (2).

6. Frein à disque à actionnement électromécanique suivant la revendication 2 ou 3, **caractérisé en ce que** la transmission de force entre le rotor (10) du moteur électrique (6) et la broche (16) s'effectue au moyen d'une denture longitudinale de bout d'arbre (19).

7. Frein à disque à actionnement électromécanique suivant l'une des revendications précédentes, **caractérisé en ce qu'**une sécurité anti-décalage en rotation (43) est prévue entre l'élément d'actionnement (30) ou l'écrou de vis (11) et la première garniture de friction (4).
